# EUROPEAN PATENT APPLICATION

(11) **EP 4 321 300 A1**
(43) Date of publication of application: **14.02.2024**
(21) Application number: 22784538.5
(22) Date of filing: 25.03.2022
(51) Int. Cl.: B24D 3/28, C08G 8/20, C08K 5/3477, C08L 61/12, C08H 7/00, C08J 5/14

(54) **LIGNIN-MODIFIED NOVOLAC-TYPE PHENOL RESIN, METHOD FOR PRODUCING SAME, MOLDING MATERIAL, RESIN COMPOSITION, AND GRINDSTONE**

(30) Priority: 06.04.2021 JP 2021064596
(71) Applicant: Sumitomo Bakelite Co.Ltd., Shinagawa-ku Tokyo 140-0002 (JP)
(72) Inventor: MURAI, Taketoshi, Tokyo 140-0002 (JP); GO, Yoshiyuki, Tokyo 140-0002 (JP)
(74) Representative: Ter Meer Steinmeister & Partner
(86) International application number: PCT/JP2022/014561
(87) International publication number: WO 2022/215553

(57) **Abstract**

A lignin-modified novolac-type phenol resin having a weight average molecular weight of equal to or more than 5500.

## Description

### TECHNICAL FIELD

The present invention relates to a lignin-modified novolac-type phenol resin, a method for producing the same, a molding material and a resin composition including the lignin-modified novolac-type phenol resin, and a grindstone formed from a cured product of the resin composition.

### BACKGROUND ART

Various developments have been achieved so far in relation to methods for producing lignin-modified phenol resins. Since lignin is readily soluble in alkalis, liquid resols that are obtained in the presence of basic catalysts have been mainly investigated, and in novolacs that are obtained in the presence of acid catalysts, introduction of lignin has been limited due to the low thermal fusibility of lignin. Thus, investigations have been conducted to utilize a lignin having a reduced molecular weight or a modified lignin obtained by various processes and operations. As this kind of technology, for example, the technology described in Patent Document 1 is known. In Patent Document 1, a technology for producing a lignin phenol resin having a weight average molecular weight of equal to or less than 5000 by causing a lignin having a weight average molecular weight of equal to or less than 5000, a phenol compound, and an aldehyde compound to react in the presence of an acid catalyst, is described. In Patent Document 1, the lignin phenol resin is used as a molding material for a friction material.

### RELATED DOCUMENT

### PATENT DOCUMENT

[Patent Document 1] Japanese Unexamined Patent Publication No. 2013-199561

### SUMMARY OF THE INVENTION

### TECHNICAL PROBLEM

However, the inventors of the present invention conducted an investigation, and it was found that the lignin phenol described in Patent Document 1 has room for improvement in terms of mechanical strength and heat-resistant strength.

### SOLUTION TO PROBLEM

The present invention was made in view of the above-described problems, and the inventors found that a lignin-modified novolac-type phenol resin having a high molecular weight exhibits satisfactory processability when highly compounded by utilizing a lignin structure, and further found that a molding material having excellent mechanical characteristics and heat-resistant strength is obtained by using a lignin-modified novolac-type phenol resin having a weight average molecular weight of equal to or more than 5500, thus completing the present invention.

According to the present invention, there is provided a lignin-modified novolac-type phenol resin having a weight average molecular weight of equal to or more than 5500.

Furthermore, according to the present invention, there is provided a molding material including the above-described lignin-modified novolac-type phenol resin and a curing agent.

According to the present invention, there is provided a resin composition including the above-described lignin-modified novolac-type phenol resin and hexamethylenetetramine.

According to the present invention, there is also provided a grindstone formed from a cured product of the above-described resin composition.

In addition, according to the present invention, there is provided a method for producing a lignin-modified novolac-type phenol resin, the method including a step of causing a lignin compound, a phenol compound, and an aldehyde compound to react in the presence of an acid catalyst under conditions in which a molar ratio (F/P) of the aldehyde compound to the phenol compound is equal to or more than 0.5, to obtain a lignin-modified novolac-type phenol resin,
in which the lignin-modified novolac-type phenol resin has a weight average molecular weight of equal to or more than 5500.

### ADVANTAGEOUS EFFECTS OF INVENTION

According to the present invention, a lignin-modified novolac-type phenol resin whose cured product has excellent mechanical characteristics and heat-resistant strength, and a method for producing the same are provided.

### DESCRIPTION OF EMBODIMENTS

Embodiments of the present invention will be described below.

### (Lignin-modified Novolac-type Phenol Resin)

A lignin-modified novolac-type phenol resin of the present embodiment has a weight average molecular weight of equal to or more than 5500. When the lignin-modified novolac-type phenol resin of the present embodiment has a high weight average molecular weight, a cured product thereof has improved mechanical strength as compared with conventional lignin-modified novolac-type phenol resins.

According to an embodiment, the lignin-modified novolac-type phenol resin has a lignin modification ratio of equal to or more than 25% and equal to or less than 60%. When the lignin-modified novolac-type phenol resin of the present invention has a lignin modification ratio in the above-described range, the resin has excellent resin strength and is also excellent in terms of curability and moldability.

### (Method for Producing Lignin-modified Novolac-type Phenol Resin)

The lignin-modified novolac-type phenol resin having a weight average molecular weight of equal to or more than 5500 according to the present embodiment can be produced by causing a lignin compound, a phenol compound, and an aldehyde compound to react in the presence of an acid catalyst under the conditions in which the molar ratio (F/P) of the aldehyde compound to the phenol compound is equal to or more than 0.5, and preferably equal to or more than 0.5 and equal to or less than 1.2. The upper limit value of the molar ratio (F/P) is preferably equal to or less than 1.1, and more preferably equal to or less than 1.0. The lower limit value of the molar ratio (F/P) is preferably equal to or more than 0.55, and more preferably equal to or more than 0.6. By carrying out a reaction under conditions in which the molar ratio (F/P) of the aldehyde compound to the phenol compound is in the above-described range, a lignin-modified novolac-type phenol resin having the above-mentioned weight average molecular weight and lignin modification ratio, which achieves both processability and strength, can be produced.

The materials and production conditions used for the production of the lignin-modified novolac-type phenol resin of the present embodiment will be described in detail below.

### (Phenol Compound)

Examples of the phenol compound used for the production of the lignin-modified novolac-type phenol resin of the present embodiment include phenol, a phenol derivative, and a combination thereof. As the phenol derivative, a phenol having an optional substituent introduced into the benzene ring can be used. Examples of the substituent include a hydroxy group; a lower alkyl group such as a methyl group and an ethyl group; a halogen atom such as fluorine, chlorine, bromine, and iodine; an amino group; a nitro group; and a carboxy group. Specific examples of the phenol compound that can be used include phenol, catechol, resorcinol, hydroquinone, o-cresol, m-cresol, p-cresol, o-fluorophenol, m-fluorophenol, p-fluorophenol, o-chlorophenol, m-chlorophenol, p-chlorophenol, o-bromophenol, m-bromophenol, p-bromophenol, o-iodophenol, m-iodophenol, p-iodophenol, o-aminophenol, m-aminophenol, p-aminophenol, o-nitrophenol, m-nitrophenol, p-nitrophenol, 2,4-dinitrophenol, 2,4,6-trinitrophenol, salicylic acid, p-hydroxybenzoic acid, and combinations thereof. Regarding the phenol compound, one kind thereof may be used alone, or two or more kinds thereof may be used in combination.

As the phenol compound, an alkylphenol compound having 2 to 18 carbon atoms can also be used. The alkylphenol compound may have a branched chain in the alkyl chain or may have an unsaturated bond. Furthermore, the substitution position of the alkyl chain on the benzene ring may be any of ortho-, meta-, and para-substitutions. Examples of the alkylphenol compound include ethylphenol, propylphenol, isopropylphenol, butylphenol, secondary butylphenol, tertiary butylphenol, amylphenol, tertiary aminophenol, hexylphenol, heptylphenol, octylphenol, tertiary octylphenol, nonylphenol, tertiary nonylphenol, decylphenol, undecylphenol, dodecylphenol, tridecylphenol, tetradecylphenol, pentadecylphenol, cardanol, cardol, urushiol, hexadecylphenol, methyl cardol, heptadecylphenol, laccol, thitsiol, and octadecylphenol. As the alkylphenol compound, vegetable oils such as cashew nut shell liquid (cashew oil) and sumac extract can also be used.

Among these, it is preferable to use one or more selected from the group consisting of phenol, cresol, xylenol, alkylphenol, and bisphenol as the phenol compound, and from the viewpoint of production cost, it is preferable to use phenol, cresol, butylphenol, and bisphenol A.

### (Lignin Compound)

The lignin compound used for the production of the lignin-modified novolac-type phenol resin of the present embodiment includes at least one selected from lignin and a lignin derivative.

Along with cellulose and hemicellulose, lignin is a major component forming the structure of the plant body and is one of the most abundant aromatic compounds in nature. Since lignin is partly bound together and exists as lignocellulose in plants, lignin often refers to substances obtainable from plants through decomposition and the like, and examples include pulp lignins such as kraft lignin, lignin sulfonic acid, soda lignin, and soda-anthraquinone lignin; organosolv lignin; lignophenol obtained when phenol is added to high-temperature high-pressure water-treated lignin or blasted lignin during extraction or the like with concentrated sulfuric acid; and phenolized lignin. The origin of lignin is not particularly limited, and examples thereof include wood that contains lignin and forms woody parts, and herbs, which include coniferous trees such as cedar, pine, cypress, and spruce; broadleaf trees such as beech, birch, oak, zelkova, and eucalyptus; and gramineous plants (herbs) such as paddy, wheat, maize, and bamboo.

In the present embodiment, the term "lignin derivative" refers to a unit structure that constitutes lignin, or a compound having a structure similar to the unit structure that constitutes lignin. A lignin derivative has a phenol derivative as a unit structure. Since this unit structure has carbon-carbon bonds and carbon-oxygen-carbon bonds, which are chemically and biologically stable, the unit structure is less likely to be affected by chemical deterioration and biological decomposition.

Examples of the lignin derivative include guaiacylpropane (ferulic acid) represented by Formula (A) of the following Formula (1), syringylpropane (sinapic acid) represented by the following Formula (B), and 4-hydroxyphenylpropane (coumaric acid) represented by the following Formula (C). The composition of the lignin derivative varies depending on the biomass used as a raw material. In coniferous trees, lignin derivatives including a guaiacylpropane structure are mainly extracted. In broadleaf trees, lignin derivatives including a guaiacylpropane structure and a syringylpropane structure are mainly extracted. In herbs, lignin derivatives including a guaiacylpropane structure, a syringylpropane structure, and a 4-hydroxyphenylpropane structure are mainly extracted.

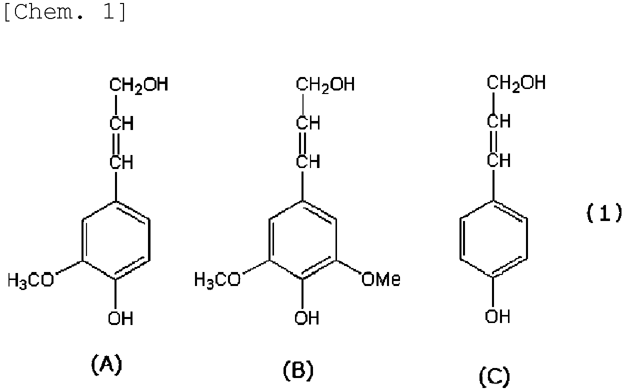

The lignin derivative is preferably obtained by decomposing biomass. Since biomass is a product obtained by incorporating and fixating carbon dioxide in the atmosphere during the process of photosynthesis, biomass contributes to suppression of an increase in carbon dioxide in the atmosphere, and industrial utilization of biomass can contribute to suppression of global warming. Examples of the biomass include lignocellulosic biomass. Examples of the lignocellulosic biomass include leaves, bark, branches, and wood of plants containing lignin, and processed products of these. Examples of the plants containing lignin include the above-mentioned broadleaf trees, coniferous trees, and herbs.

Examples of a method for decomposing biomass include a method of performing a chemical treatment, a method of performing a hydrolysis treatment, a steam blasting method, a supercritical water treatment method, a subcritical water treatment method, a method of performing a mechanical treatment, a cresol sulfate method, and a pulp production method. From the viewpoint of environmental load, a steam blasting method, a subcritical water treatment method, and a method of performing a mechanical treatment are preferred. From the viewpoint of cost, a pulp production method is preferred. Furthermore, from the viewpoint of cost, it is preferable to use a by-product of biomass utilization. A lignin derivative can be prepared by, for example, subjecting biomass to a decomposition treatment in the presence of various cooking liquors and solvents at 150°C to 400°C and 1 to 40 MPa for 8 hours or less. Lignin derivatives can be prepared by the methods disclosed in Japanese Unexamined Patent Publication No. 2009-084320, Japanese Unexamined Patent Publication No. 2012-201828, and the like.

Examples of the lignin derivative include a product obtained by decomposing lignocellulose in which lignin, cellulose, and hemicellulose are bound together. Examples of the lignin derivative may include lignin decomposition products, cellulose decomposition products, hemicellulose decomposition products, and the like, all of which include compounds having a lignin skeleton as main components. Furthermore, the lignin derivative may also include biomass-derived or process-derived inorganic substances; however, when the lignin derivative is used for the use applications of the present embodiment, the content of the inorganic substances is preferably equal to or less than 10% by mass with respect to the total amount of the lignin derivative used.

It is preferable that the lignin derivative has many reaction sites on which a curing agent acts through an electrophilic substitution reaction toward the aromatic rings, and from the viewpoint that a compound having less steric hindrance in the vicinity of the reaction sites has excellent reactivity, it is preferable that at least one of the ortho-position and the para-position of an aromatic ring including a phenolic hydroxyl group is unsubstituted, while a lignin derived from coniferous trees and herbs including a large quantity of structures of guaiacyl nuclei and 4-hydroxyphenyl nuclei as the aromatic units of lignin is preferred. Regarding the lignin derivative, those disclosed in Japanese Unexamined Patent Publication No. 2009-084320, Japanese Unexamined Patent Publication No. 2012-201828, and the like can be used.

The lignin derivative may also be a lignin derivative having a functional group in addition to the above-described basic structure (secondary derivative of lignin).

The functional group carried by the secondary derivative of lignin is not particularly limited; however, for example, a functional group capable of reacting with one or more of the same functional groups, or a functional group capable of reacting with another functional group is suitable. Specific examples thereof include an epoxy group, a methylol group, as well as a vinyl group, an ethynyl group, a maleimide group, a cyanate group, and an isocyanate group, all of which have carbon-carbon unsaturated bonds. Among these, a lignin derivative into which a methylol group is introduced (methylolated) is preferably used. Such a secondary derivative of lignin undergoes self-crosslinking through a self-condensation reaction between methylol groups and also crosslinks with an alkoxymethyl group and a hydroxyl group in the crosslinking agent described below. As a result, a lignin-modified novolac-type phenol resin having a homogeneous and rigid skeleton and having excellent solvent resistance is obtained.

In addition, the lignin derivative used in the present embodiment may have a carboxyl group. A lignin obtained by a pulping process or a high-temperature high-pressure water treatment may have a carboxyl group. Since a lignin-modified novolac-type phenol resin obtained from a lignin derivative having a carboxyl group has many crosslinking points for a curing agent that will be described below, the crosslinking density of the resulting crosslinked body can be improved, and as a result, a crosslinked body having excellent solvent resistance can be obtained.

In a case where the above-mentioned lignin derivative has a carboxyl group, the carboxyl group can be checked by the presence or absence of absorption of a peak at 172 to 174 ppm when the lignin derivative is subjected to a ¹³C-NMR analysis pertaining to the carboxyl group.

The lignin compound used for the production of the lignin-modified novolac-type phenol resin of the present embodiment has a weight average molecular weight of, for example, equal to or more than 2,000 and equal to or less than 100,000. The lower limit value of the weight average molecular weight is preferably equal to or more than 2,500, more preferably equal to or more than 3,000, and even more preferably equal to or more than 4,000. The upper limit value of the weight average molecular weight is preferably equal to or less than 90,000, more preferably equal to or less than 80,000, and even more preferably equal to or less than 75,000. By using a lignin compound having a weight average molecular weight in the above-described range, the resulting lignin-modified novolac-type phenol resin can have excellent curability, and a cured product thereof can have high mechanical strength. The weight average molecular weight is a polystyrene-equivalent weight average molecular weight measured by gel permeation chromatography and can be determined by the method of the Examples.

The lignin compound used for the production of the lignin-modified novolac-type phenol resin of the present embodiment has a number average molecular weight of, for example, equal to or more than 200 and equal to or less than 5,000. The lower limit value of the number average molecular weight is preferably equal to or more than 300, more preferably equal to or more than 350, and even more preferably equal to or less than 400. The upper limit value of the number average molecular weight is preferably equal to or less than 4,000, more preferably equal to or less than 3,000, and even more preferably equal to or less than 2,000. A lignin compound having a number average molecular weight in the above-described range is preferred because the lignin compound has excellent reactivity and therefore has excellent workability in the production process for the lignin-modified novolac-type phenol resin. Furthermore, by using a lignin compound having a number average molecular weight in the above-described range, the resulting lignin-modified novolac-type phenol resin has excellent curability, and a cured product thereof can have high mechanical strength. The number average molecular weight is a polystyrene-equivalent number average molecular weight measured by gel permeation chromatography and can be determined by the method of the Examples.

Here, an example of the method for measuring the molecular weight by the above-mentioned gel permeation chromatography will be described.

In the method for measuring the molecular weight by gel permeation chromatography, first, a lignin derivative is dissolved in a solvent, and a measurement sample is prepared. The solvent used at this time is not particularly limited as long as it can dissolve the lignin derivative; however, from the viewpoint of the measurement accuracy of gel permeation chromatography, for example, tetrahydrofuran and N-methyl-2-pyrrolidone are preferred. Since the lignin compound of the present embodiment can include insoluble matter based on biomass, process-derived inorganic substances, and plant-derived high molecular weight organic substances, the molecular weight of the lignin compound is determined by selecting an appropriate solvent and filtering the insoluble matter. In order to increase the lignin modification ratio of the obtained lignin-modified novolac-type phenol resin, the content of the insoluble matter of the lignin compound used is preferably equal to or less than 30% by mass in an appropriate solvent. The molecular weight of the lignin-modified novolac-type phenol resin can be similarly determined by filtering the insoluble matter. The content of the insoluble matter in the lignin-modified novolac-type phenol resin is preferably equal to or less than 15% by mass, and more preferably equal to or less than 10% by mass. When the amount of the content is to the above-described extent, the lignin-modified novolac-type phenol resin has satisfactory curability and can be cured particularly uniformly.

Next, "TSKgel GMHXL (manufactured by Tosoh Corporation)" and "G2000HXL (manufactured by Tosoh Corporation)", which are organic general-purpose columns packed with styrene-based polymer packing agents, are connected in series to a GPC system "HLC-8320GPC (manufactured by Tosoh Corporation)". 200 µL of the above-mentioned measurement sample is injected into this GPC system, tetrahydrofuran as an eluent is developed at 40°C at a rate of 1.0 mL/min, and the retention time is measured by utilizing the differential refractive index (RI) and the ultraviolet absorbance (UV). From a separately created calibration curve showing the relationship between the retention time and the molecular weight of polystyrene standards, the number average molecular weight and the weight average molecular weight of the target lignin compound can be calculated. The refractive index is preferred as the detection mode.

The molecular weights of the polystyrene standards used for creating the calibration curve are not particularly limited; however, for example, polystyrene standards (manufactured by Tosoh Corporation) having weight average molecular weights of 1,090,000, 427,000, 190,000, 96,400, 37,900, 18,100, 10,200, 5,970, 2,630, 1,050, and 500 can be used.

The softening point of the lignin compound used for the production of the lignin-modified novolac-type phenol resin of the present embodiment is preferably equal to or higher than 90°C, more preferably equal to or higher than 110°C, and even more preferably equal to or higher than 130°C. On the other hand, a lignin compound with a softening point which is so high that cannot be measured can be used. When a lignin-modified novolac-type phenol resin having a high modification ratio is produced by using such a lignin compound, the resulting modified novolac-type phenol resin has a high molecular weight, low fluidity, and poor processability. However, despite that the lignin-modified novolac-type phenol resin of the present embodiment is a lignin-modified phenol resin having a high lignin modification ratio obtainable from such a lignin compound and having a high molecular weight, unexpectedly satisfactory processability is obtained.

The content of volatile matter of the lignin compound used in the present embodiment is preferably equal to or less than 60% by mass, more preferably equal to or less than 50% by mass, and even more preferably equal to or less than 40% by mass. When the volatile matter of the lignin compound is within the above-described range, the reactivity of the lignin compound can be improved, and the reaction rate of the resulting lignin-modified novolac-type phenol resin can be increased. The main volatile matter is often water, and for example, the content is calculated by spreading 4 g in an aluminum cup and drying it at 80°C for 20 hours.

The softening point of the lignin compound can be measured according to JISK2207 by using a ring and ball type softening point tester (for example, ASP-MG2 type manufactured by Meltec Corporation). When the lignin compound includes a large amount of water, measurement is made after the lignin compound is completely dried at a temperature equal to or lower than 70°C. In the present embodiment, for example, when a satisfactory sample cannot be prepared due to the thermal fusibility of the lignin compound with a hot plate at 150°C to 200°C, it is determined that the softening point is too high to be measured.

When a lignin compound obtained by decomposing biomass, a large amount of components having a low molecular weight may be mixed in, and these components may cause volatile matter and foul odor during heating and a decrease in the softening point. These components can be utilized as they are, or can be removed by heating, drying, and the like of the lignin compound to adjust the softening point and foul odor.

### (Aldehyde Compound)

Examples of the aldehyde compound used for the production of the lignin-modified novolac-type phenol resin of the present embodiment include formaldehyde, paraformaldehyde, trioxane, acetaldehyde, propionaldehyde, polyoxymethylene, chloral, hexamethylenetetramine, furfural, glyoxal, n-butylaldehyde, caproaldehyde, allylaldehyde, benzaldehyde, crotonaldehyde, acrolein, tetraoxymethylene, phenyl acetaldehyde, o-tolualdehyde, salicylaldehyde, and paraxylene dimethyl ether. Preferred are formaldehyde, paraformaldehyde, trioxane, polyoxymethylene, acetaldehyde, paraxylene dimethyl ether, and combinations thereof. Regarding the aldehyde compound, one kind thereof may be used alone, or two or more kinds thereof may be used in combination. Among these, it is preferable to use formaldehyde or acetaldehyde from the viewpoints of productivity and low cost.

### (Acid Catalyst)

The acid catalyst used for the production of the lignin-modified novolac-type phenol resin of the present embodiment may be any acid catalyst that can be used as a reaction catalyst, and an organic acid, an inorganic acid, and a combination thereof can be used. Examples of the organic acid include acetic acid, formic acid, oxalic acid, malonic acid, succinic acid, glutaric acid, adipic acid, benzoic acid, salicylic acid, sulfonic acid, phenolsulfonic acid, and p-toluenesulfonic acid. Examples of the inorganic acid include hydrochloric acid, sulfuric acid, a sulfuric acid ester, phosphoric acid, and a phosphoric acid ester.

In the production of the lignin-modified novolac-type phenol resin of the present embodiment, the molar ratio (F/P) of the aldehyde compound to the phenol compound is, for example, equal to or more than 0.5, preferably equal to or more than 0.55, more preferably is equal to or more than 0.6. The upper limit value of the molar ratio (F/P) of the aldehyde compound to the phenol compound is, for example, equal to or less than 1.2, preferably equal to or less than 1.1, and more preferably equal to or less than 1.0. By carrying out the reaction under the conditions in which the molar ratio (F/P) of the aldehyde compound to the phenol compound is in the above-described range, a lignin-modified novolac-type phenol resin having a weight average molecular weight of equal to or more than 5500 and having both processability and strength improved together, can be obtained.

In the production of the lignin-modified novolac-type phenol resin of the present embodiment, the step of causing a lignin compound, a phenol compound, and an aldehyde compound to react in the presence of an acid catalyst may include a step (step 1) of mixing the lignin compound and the phenol compound under heating at a temperature equal to or higher than 70°C and equal to or lower than 120°C to disperse the lignin compound and obtain a mixture; a step (step 2) of mixing an acid catalyst therein simultaneously with step 1 or after step 1; and a step (step 3) of mixing the aldehyde compound therein after step 2. Furthermore, it is preferable that the step of causing a lignin compound, a phenol compound, and an aldehyde compound to react in the presence of an acid catalyst is carried out at a temperature of, for example, 60°C to 120°C, and preferably 80°C to 100°C, for example, for a reaction time of 10 minutes to 100 minutes. As a result, the reaction can be carried out efficiently and sufficiently. Furthermore, by carrying out the reaction under heating, the starting materials are uniformly mixed, the resulting lignin-modified novolac-type phenol resin can be cured uniformly due to intermolecular entanglement and intermolecular action, and therefore, molding with excellent dimensional accuracy can be realized. The reaction time is not particularly limited and may be appropriately determined according to the types of starting materials, the molar ratio of blending, the amount of use and type of catalyst, and the reaction conditions. The reaction mixture after the reaction may be subjected to post-treatment. For the post-treatment, for example, distillation under heating (for example, equal to or higher than 150°C) or at normal pressure, distillation under reduced pressure, or a combination thereof can be used.

It is preferable to carry out the above-described step 1, step 2, and step 3 without a solvent; however, an organic solvent or water may be used as the solvent. Hydrated lignin may be used instead of adding water. Examples of the organic solvent include an alcohol, a ketone, an ester, an ether, and a hydrocarbon. Examples of the alcohol include methanol, ethanol, propanol, isopropanol, butanol, pentanol, hexanol, octanol, ethylene glycol, diethylene glycol, triethylene glycol, propylene glycol, and glycerin. Examples of the ketone include acetone, methyl ethyl ketone, methyl isobutyl ketone, diisobutyl ketone, and cyclohexanone. Examples of the ester include methyl acetate, ethyl acetate, propyl acetate, butyl acetate, methoxybutyl acetate, amyl acetate, methyl lactate, ethyl lactate, and butyl lactate. Examples of the ether include propyl ether, dioxane, methyl cellosolve, ethyl cellosolve, propyl cellosolve, butyl cellosolve, propylene glycol monomethyl ether, propylene glycol monoethyl ether, propylene glycol monopropyl ether, propylene glycol monobutyl ether, methyl carbitol, ethyl carbitol, butyl carbitol, methyl cellosolve acetate, ethyl cellosolve acetate, propyl cellosolve acetate, butyl cellosolve acetate, propylene glycol monomethyl ether acetate, propylene glycol monoethyl ether acetate, propylene glycol monopropyl ether acetate, and propylene glycol monobutyl ether acetate. Examples of the hydrocarbon include toluene, xylene, pentane, hexane, cyclohexane, heptane, octane, decane, solvent naphtha, industrial gasoline, petroleum ether, petroleum benzine, and ligroin. Regarding these, one kind thereof may be used alone, or two or more kinds thereof may be used in combination.

Here, in conventional methods of increasing the molecular weight of the lignin-modified novolac-type phenol resin by adjusting the reaction ratio of the phenol compound, the lignin compound, and the aldehyde compound, the viscosity of the reactants increases, dehydration is less likely to occur, and therefore, the process time may become longer. Furthermore, a large amount of the phenol compound may remain unreacted.

In contrast, the method of the present embodiment can shorten the process time and can increase the yield of the resin as compared with a conventional case of increasing the molecular weight with the reaction ratio of the phenol compound, the lignin compound, and the aldehyde compound. Furthermore, by adjusting the molar ratio (F/P) of the aldehyde compound to the phenol compound to the above-described range, and adjusting the molecular weight, the molecular weight distribution, and the amount of addition of the lignin compound used, the characteristics of the obtained lignin-modified novolac-type phenol resin and the physical properties of the resin material can be adjusted to desired ranges.

The lignin-modified novolac-type phenol resin of the present embodiment obtained by the above-described method has a weight average molecular weight of equal to or more than 5500. The weight average molecular weight of the lignin-modified novolac-type phenol resin of the present embodiment is, for example, equal to or more than 5,500 and equal to or less than 50,000, preferably equal to or more than 6,000 and equal to or less than 45,000, and more preferably equal to or more than 7,000 and equal to or less than 40, 000. A lignin-modified novolac-type phenol resin having a weight average molecular weight in the above-described range has excellent curing characteristics, and a cured product thereof has high mechanical strength. The lignin-modified novolac-type phenol resin of the present embodiment has a lignin modification ratio of equal to or more than 25% and equal to or less than 60%, preferably equal to or more than 30% and equal to or less than 55%, and more preferably equal to or more than 35% and equal to or less than 55%. As the lignin-modified novolac-type phenol resin of the present invention has a lignin modification ratio in the above-described range, the lignin-modified novolac-type phenol resin has excellent resin strength and heat resistance and also has excellent curability and moldability.

The lignin-modified novolac-type phenol resin of the present embodiment can be provided in the form of, for example, a fine powder, granules, pellets, or varnish. The form of the lignin-modified novolac-type phenol resin can be appropriately selected according to the use application.

### (Molding Material)

The lignin-modified novolac-type phenol resin of the present embodiment obtained as described above is suitably used as, for example, a molding material for transfer molding and injection molding. More specifically, the above-described lignin-modified novolac-type phenol resin of the present embodiment is provided as a molding material by blending a curing agent (crosslinking agent) and optionally other components, and kneading the mixture at a predetermined temperature. A molding material including the lignin-modified novolac-type phenol resin of the present embodiment can be subjected to injection molding, and a molded article thereof has excellent mechanical properties such as strength and elastic modulus.

As the curing agent used for the molding material of the present embodiment, for example, an amine-based curing agent can be used. As the amine-based curing agent, specifically, hexamethylenetetramine, hexamethoxymethylol melamine, and the like can be used. As the amine-based curing agent, for example, it is preferable to use hexamethylenetetramine.

The content of the curing agent is, for example, 7 parts by mass to 30 parts by mass, and preferably 10 parts by mass to 25 parts by mass, with respect to 100 parts by mass of the lignin-modified novolac-type phenol resin. A molding material having satisfactory curability can be obtained by setting the content to be within the above-described numerical value range.

The molding material of the present embodiment may further include a filler material. That is, the molding material can include a lignin-modified novolac-type phenol resin, a curing agent, and a filler material.

As the filler material, for example, a fiber base material, an organic filler material, or an inorganic filler material can be used. A fiber base material is a filler material having a fibrous shape. The organic filler material and the inorganic filler material may be each either a granular-shaped filler material or a plate-shaped filler material. The plate-shaped filler material is a filler material whose shape is a plate shape. A granular-shaped filler material is a filler material having a shape other than a fibrous shape and a plate shape, including irregular shapes. These may be used singly, or two or more kinds thereof may be used in combination.

Regarding the granular-shaped filler material, for example, granular inorganic filler materials can be used, and glass beads, glass powder, calcium carbonate, talc, silica, aluminum hydroxide, clay, mica, and the like can be used.

Examples of the fibrous-shaped filler material include fibrous-shaped inorganic filler materials such as glass fibers, carbon fibers, asbestos fibers, metal fibers, wollastonite, attapulgite, sepiolite, rock wool, aluminum borate whiskers, potassium titanate fibers, calcium carbonate whiskers, titanium oxide whiskers, and ceramic fibers; and fibrous-shaped organic filler materials such as aramid fibers, polyimide fibers, and poly(paraphenylenebenzobisoxazole fibers). These may be used alone, or two or more kinds thereof may be used in combination.

Furthermore, examples of the plate-shaped filler materials and the granular-shaped filler materials include talc, kaolin clay, calcium carbonate, zinc oxide, calcium silicate hydrate, mica, glass flakes, glass powder, magnesium carbonate, silica, titanium oxide, alumina, aluminum hydroxide, magnesium hydroxide, barium sulfate, calcium sulfate, calcium sulfite, zinc borate, barium metaborate, aluminum borate, calcium borate, sodium borate, aluminum nitride, boron nitride, silicon nitride, and pulverization products of the above-described fibrous-shaped filler materials.

The content of the filler material in the molding material is, for example, 25 parts by mass to 500 parts by mass, preferably 50 parts by mass to 400 parts by mass, and more preferably 100 parts by mass to 300 parts by mass, with respect to 100 parts by mass of the lignin-modified novolac-type phenol resin. By setting the content to be equal to or more than the above-described lower limit value, a molding material including the lignin-modified novolac-type phenol resin can have excellent mechanical strength. By setting the content to be equal to or less than the above-described upper limit value, production stability of a crosslinked body (molded body) can be enhanced.

The resin material for producing a molded body of the present embodiment can include other components in addition to the above-mentioned components to the extent that the purpose of the present invention is not impaired. Examples of the other components include additives such as an elastomer, a curing accelerator, a resin component, a mold release agent, a pigment, a flame retardant, an adhesion improver, and a coupling agent.

Examples of the elastomer include, but are not particularly limited to, acrylonitrile-butadiene rubber, isoprene, styrenebutadiene rubber, and ethylene-propylene rubber. Among these, acrylonitrile-butadiene rubber is preferred. Toughness in particular can be imparted by using an elastomer.

As the curing accelerator, conventional curing accelerators can be used without particular limitation, and examples include oxides or hydroxides of alkaline earth metals, such as magnesium oxide, calcium hydroxide, and barium hydroxide; and aromatic carboxylic acids such as salicylic acid and benzoic acid. The curing accelerator is used in an amount of, for example, 0.5 parts by mass to 20 parts by mass with respect to 100 parts by mass of the lignin-modified novolac-type phenol resin.

Examples of the resin component include a urea (urea) resin, a resin having a triazine ring, such as a melamine resin, a bismaleimide resin, a polyurethane resin, a silicone resin, a resin having a benzoxazine ring, a cyanate ester resin, a polyvinyl butyral resin, and a polyvinyl acetate resin. Furthermore, a plurality of these can be used in combination as necessary.

Examples of the mold release agent include stearic acid, calcium stearate, zinc stearate, and polyethylene.

Examples of the pigment include carbon black.

The resin material of the present embodiment is obtained by melting and kneading in advance a lignin-modified novolac-type phenol resin, a curing agent, and a filler material when used, with a kneader, a roll, or the like, subsequently uniformly mixing the resultant with the above-described other components, or melting and kneading all the raw material components to be blended, with a kneading device such as a roll, a co-kneader, or a twin-screw extruder alone, or with a combination of a roll and another mixing device, and then granulating or pulverizing the mixture. In the present embodiment, the molding material is provided in the form of, for example, powder, granules, a tablet, or a sheet.

By heat-treating and molding the obtained molding material, a molded article (crosslinked body) formed from a cured product of this molding material can be obtained. The method of molding the molding material is not particularly limited; however, for example, transfer molding, compression molding, and injection molding can be used.

Examples of the molded article of the present embodiment include automobiles, aircraft, railroad vehicles, ships, general-purpose machines, household appliances, cooking utensils and molded articles used for peripheral parts thereof, or molded articles used for housings, structural and mechanical parts, and electrical and electronic parts of the above-described articles.

### (Resin Composition)

The lignin-modified novolac-type phenol resin of the present embodiment is suitably used as a resin composition for resinoid grindstones. More specifically, the lignin-modified novolac-type phenol resin of the above-described present embodiment is provided as a powdery resin composition for a resinoid grindstone by blending with hexamethylenetetramine. Since the resin composition of the present embodiment includes the lignin-modified novolac-type phenol resin of the present embodiment and hexamethylenetetramine, the resin composition has excellent curability, and a cured product of the resin composition has mechanical strength and elastic modulus to the extent that is appropriate for use as a grindstone. The resin composition of the present embodiment is provided, for example, in the form of a powdery and granular material. When the resin composition is provided in the form of powder, it is preferable to pulverize the resin composition such that the average particle size is equal to or more than 10 um and equal to or less than 60 um, from the viewpoint of handleability. From the viewpoint of grindstone strength, an average particle size of equal to or more than 15 um and equal to or less than 45 um is more preferred.

The amount of hexamethylenetetramine in the resin composition of the present embodiment is preferably equal to or more than 2% by mass and equal to or less than 20% by mass, more preferably equal to or more than 5% by mass and equal to or less than 17% by mass, and even more preferably equal to or more than 8% by mass and equal to or less than 15% by mass, with respect to the lignin-modified novolac-type phenol resin. When the blending amount of hexamethylenetetramine is less than the above-described lower limit value, curing of the lignin-modified novolac-type phenol resin may be insufficient, and when the blending amount is more than the above-described upper limit value, gas generated by decomposition of hexamethylenetetramine may cause cracks or swelling in the obtained cured product.

### (Grindstone)

The resin composition of the present embodiment described above is used to produce a resinoid grindstone. The resinoid grindstone of the present embodiment is obtained by adding abrasive grains to the above-described resin composition; however, filler materials, additives, and the like other than the abrasive grains can be optionally used. Regarding the abrasive grains, for example, alumina oxide, silicon carbide, and diamond can be used, and these play a role in exhibiting the grinding performance of grindstones. As the filler material, for example, inorganic fillers such as cryolite, iron sulfide, iron oxide, barium sulfate, and quicklime; and organic fillers such as thermosetting resin powders, rice husks, and wood flour can be used, and these play a role in improving the grinding performance of grindstones. As the additives, for example, a silane coupling agent, furfuryl alcohol, furfural, creosote oil, other organic solvents, or a liquid resol-type phenol resin can be used, and these can be used after wetting the surface of abrasive grains therewith in order to improve adhesiveness to the abrasive grains.

As a method for producing a resinoid grindstone from the resin composition of the present embodiment, for example, a resinoid grindstone can be obtained by a step of first mixing a liquid resol-type phenol resin with abrasive grains, thoroughly kneading the mixture, obtaining abrasive grains with wet surfaces, and then adding a powdery resin composition including the lignin-modified novolac-type phenol resin of the present embodiment and hexamethylenetetramine, as well as the above-mentioned filler material and additives as necessary to the abrasive grains to prepare resin-coated grains; and a step of molding the obtained resin-coated grains into a required shape in a mold at normal temperature or heated to 40°C to 80°C and heating and baking this molded product for 10 to 50 hours as needed. The conditions for heating and baking are not particularly limited; however, for example, conditions in which the temperature is raised to normal temperature to 200°C for 10 to 24 hours and held at the peak temperature for 3 to 10 hours, and then gradually lowered, can be used.

The grindstone of the present embodiment obtained by the above-described method has excellent bending strength and water-resistant strength, and therefore has excellent grinding performance.

Thus, the embodiments of the present invention have been described above; however, these are only examples of the present invention, and various configurations other than the above-described ones can be employed.

### EXAMPLES

Hereinafter, the present invention will be described by way of Examples and Comparative Examples; however, the present invention is not intended to be limited to these.

### [Examples A1 to A5 and Comparative Examples A1 to A3]

### <Preparation of Lignin-modified Novolac-type Phenol Resin>

### (Preparation Example A1)

### (Preparation of Lignin Derivative) First, a lignin derivative used for synthesizing a lignin-modified novolac-type phenol resin was prepared by the following procedure.

1500 parts by weight of cedar wood flour having a moisture content of 50%, as well as 5000 parts by weight of pure water, 180 parts by weight of sodium hydroxide, and 120 parts by mass of sodium carbonate as a cooking liquor, and 7.5 parts by weight of 9,10-anthraquinone as a cooking aid were charged into a stainless steel autoclave facility having a capacity of 10 L, and a digestion reaction was carried out with stirring at 170°C for 3 hours. The cooking liquor after the reaction was cooled to room temperature, pulp component was removed with a screen, and a black liquor including lignin was separated. Dilute sulfuric acid was added to the separated black liquor to adjust the pH to 8, and a resulting precipitate was centrifuged. After washing twice with 500 parts by mass of water, the precipitate was suspended in 5 times the amount of water, and the suspension was readjusted to pH 2 with dilute sulfuric acid. The precipitated lignin is centrifuged again, washed with water, subsequently filtered under suction, spread on a vat, air-dried, and dried in an oven under reduced pressure at a temperature of equal to or lower than 70°C, and 140 parts by mass to 150 parts by weight (in terms of solid content) of an alkali lignin in the form of a brown powder having a solid content of equal to or more than 70% was obtained. The solid content ratio of lignin was calculated from the residual ratio obtained after putting 4 g of a sample in an aluminum cup and drying the sample by heating at 135°C for 1 hour.

### (Preparation of Lignin-modified Phenol Resin) Subsequently, a lignin-modified novolac-type phenol resin was synthesized by the following procedure.

100 parts by weight of phenol was introduced into a four-necked flask equipped with a stirrer, a cooling tube, and a thermometer, 40 parts by weight of the lignin derivative solid content was slowly added thereto, the mixture was mixed and dispersed at a temperature of equal to or higher than 60°C, 1.4 parts by weight of oxalic acid was added thereto, 58.6 parts by weight of a 37% aqueous solution of formaldehyde was slowly added thereto over 60 minutes to react at 100°C, the mixture after the addition was allowed to react at 100°C for 60 minutes, the temperature was raised to a temperature equal to or higher than 150°C by dehydration at normal pressure and reduced pressure, the mixture was extracted when a desired phenol concentration was reached, and 128.1 parts by weight of lignin-modified novolac-type phenol resin A1 was obtained.

### (Preparation Example A2)

(Preparation of Lignin Derivative) A lignin derivative was prepared in the same manner as in Preparation Example A1, except that when the reaction mixture was adjusted to pH 2 and centrifuged, the number of times of water washing was increased by adding water again and performing centrifugation, and drying was performed at a temperature equal to or lower than 80°C in an oven under reduced pressure.

(Preparation of Lignin-modified Phenol Resin) 127.9 parts by weight of lignin-modified phenol resin A2 was obtained in the same manner as in Preparation Example A1, except that 40 parts by weight of the lignin derivative solid content and 1.4 parts by weight of oxalic acid were added to 100 parts by weight of phenol, and the mixture was mixed at a temperature equal to or higher than 70°C for 30 minutes.

### (Preparation Example A3)

(Preparation of Lignin Derivative) A lignin derivative was prepared in the same manner as in Preparation Example A1, except that 5000 parts by weight of pure water, 150 parts by weight of sodium hydroxide, 80 parts by weight of sodium sulfide, and 70 parts by mass of sodium carbonate as a cooking liquor, and 7.5 parts by weight of 9,10-anthraquinone as a cooking aid were used, and that when the reaction mixture was adjusted to pH 2 and centrifuged, the number of times of water washing was increased by adding water again and performing centrifugation, and drying was performed at a temperature equal to or lower than 80°C in an oven under reduced pressure.

(Preparation of Lignin-modified Phenol Resin) 124.2 parts by weight of lignin-modified phenol resin A3 was obtained in the same manner as in Preparation Example A1, except that 37.4 parts by weight of the lignin derivative solid content and 1.5 parts by weight of oxalic acid were added to 100 parts by weight of phenol, the mixture was mixed at a temperature equal to or higher than 70°C for 30 minutes, and 51.2 parts by weight of a 37% aqueous solution of formaldehyde was used.

### (Preparation Example A4)

(Preparation of Lignin Derivative) A lignin derivative was obtained in the same manner as in Preparation Example A1, except that beech wood flour having a moisture content of 50% was digested at 195°C for 1 hour by using 3000 parts by weight of ethanol and 2250 parts by weight of water as a cooking liquor, and an aqueous solution obtained by fractionally distilling ethanol from the cooking liquor was centrifuged and freeze-dried to obtain a lignin derivative having a solid content of equal to or more than 90%.

(Preparation of lignin-modified phenol resin) 138.1 parts by weight of lignin-modified phenol resin A4 was obtained in the same manner as in Preparation Example A1, except that 100 parts by weight of phenol, 60 parts by weight of the lignin derivative solid content, and 1.6 parts by weight of oxalic acid were added, and 51.6 parts by weight of a 37% aqueous solution of formaldehyde was used.

### (Preparation Example A5)

(Preparation of Lignin Derivative) A lignin derivative was obtained in the same manner as in Preparation Example A1.

(Preparation of Lignin-modified Phenol Resin) 140.6 parts by weight of lignin-modified phenol resin A5 was obtained in the same manner as in Preparation Example A1, except that 100 parts by weight of phenol, 41.7 parts by weight of the lignin derivative solid content, and 1.4 parts by weight of oxalic acid were added, 57.8 parts by weight of a 37% aqueous solution of formaldehyde was used to reach a desired phenol concentration, and then 2.1 parts by weight of cashew shell oil was added thereto, mixed, and extracted.

### (Preparation Example A6)

(Preparation of Lignin Derivative) 200 parts by weight of cedar wood powder having a moisture content of 50% and 567 parts by weight of pure water as a cooking liquor were charged into a stainless steel autoclave facility having a capacity of 10 L, and the mixture was treated under stirring at 300°C for 1 hour. The cooking liquor after the reaction was cooled to room temperature and separated by filtration to obtain a solid content including lignin. The obtained solid content was immersed in 250 parts of acetone for 12 hours. This was filtered, acetone was distilled off from the filtrate at a temperature of equal to or lower than 70°C, and the residue was dried to obtain 15.2 parts by weight of a lignin derivative.

(Preparation of Lignin-modified Phenol Resin) 143.7 parts by weight of lignin-modified phenol resin A6 was obtained in the same manner as in Preparation Example A1, except that 100 parts by weight of phenol, 43.5 parts by weight of the lignin derivative solid content, 1.4 parts by weight of oxalic acid, and 73.3 parts by weight of a 37% aqueous solution of formaldehyde were used.

### (Preparation Example A7)

(Preparation of Lignin Derivative) A lignin derivative was obtained in the same manner as in Preparation Example A3, except that beech wood flour having a moisture content of 50% was used. In addition, the lignin derivative was dispersed in acetone and filtered, acetone was distilled off from the filtrate at a temperature of equal to or lower than 70°C, and the residue was dried to obtain a low-molecular-weight lignin derivative.

(Preparation of Lignin-modified Phenol Resin) 121.6 parts by weight of lignin-modified phenol resin A7 was obtained in the same manner as in Preparation Example A1, except that 100 parts by weight of phenol, 33.3 parts by weight of the lignin derivative solid content, 1.3 parts by weight of oxalic acid, and 58.6 parts by weight of a 37% aqueous solution of formaldehyde were used.

The weight average molecular weights, the number average molecular weights, and the softening temperatures of the obtained lignin derivatives were measured using a GPC method or a ring and ball type softening point tester, respectively. The results are shown in Table 1 as "Characteristics of lignin".

Furthermore, the weight average molecular weights, the number average molecular weights, and the lignin modification ratios of the obtained lignin-modified novolac-type phenol resins were measured. These measurement results are shown in Table 1 as "Characteristics of lignin-modified phenol resin". Since the lignin-modified novolac phenol resin component of the present embodiment may include a component having a particularly high molecular weight, the value obtained by excluding a high-molecular-weight component having a standard polystyrene number average molecular weight of more than 427,000 is also described within ( ) in the table for reference.

### <Production of Molding Material>

In each Example and each Comparative Example, 15 parts by mass of hexamethylenetetramine (curing agent) was added to 100 parts by mass of the lignin-modified phenol resin shown in Table 1 at normal temperature, and the mixture was pulverized and mixed to prepare a phenol-modified lignin resin composition.

The obtained phenol-modified lignin resin composition was blended with 160 parts by weight of glass fibers (filler material, glass milled fibers, manufactured by Nitto Boseki Co., Ltd., standard fiber diameter 1011.5 µm, average fiber length 90 pm) and 8 parts by weight of additives (stearic acid (manufactured by NOF Corporation) and carbon black (manufactured by Mitsubishi Chemical Corporation, #5)), and the mixture was kneaded with a heated roll at about 90°C for about 5 minutes, cooled, and pulverized to obtain a phenol-modified lignin resin composition (molding material).

### (Phenol Resin)

• Phenol resin A1: Lignin-modified novolac-type phenol resin A1 of Preparation Example A1
• Phenol resin A2: Lignin-modified novolac-type phenol resin A2 of Preparation Example A2
• Phenol resin A3: Lignin-modified novolac-type phenol resin A3 of Preparation Example A3
• Phenol resin A4: Lignin-modified novolac-type phenol resin A4 of Preparation Example A4
• Phenol resin A5: Lignin-modified novolac-type phenol resin A5 of Preparation Example A5
• Phenol resin A6: Lignin-modified novolac-type phenol resin A6 of Preparation Example A6
• Phenol resin A7: Lignin-modified novolac-type phenol resin A7 of Preparation Example A7
• Phenol resin A8: Unmodified novolac-type phenol resin A8 (Mw = 9640, Mn = 940)

### (Evaluation of Performance of Molding Material)

The obtained molding materials were subjected to transfer molding under the conditions of 175°C, 20 MPa, and 3 min, and were further heat-treated at 180°C for 8 h to obtain molded articles (cured products). The obtained molded articles were evaluated for the following items. The results are shown in Table 1.

### (Bending Strength (25°C) and Flexural Modulus (25°C))

The flexural modulus and bending strength were measured at 25°C according to JIS K 6911 "General Testing Methods for Thermosetting Plastics". Specifically, a three-point bending test was performed by applying a load at a rate of 2 mm/min using a precision universal testing machine (AUTOGRAPH AG-Xplus manufactured by Shimadzu Corporation).

### (Bending Strength (150°C) and Flexural Modulus (150°C))

The flexural modulus and the bending strength were measured at 150°C in the same manner as described above.

### (Charpy Impact Strength)

The Charpy impact strength was measured according to JIS K 6911 "General Testing Methods for Thermosetting Plastics".

### (Insulation Resistance)

The insulation resistance was performed according to JIS K 6911 "General Testing Methods for Thermosetting Plastics".

### [Table 1]

**Table 1**

| | | Comparative Example A1 | Comparative Example A2 | Comparative Example A3 | Example A1 | Example A2 | Example A3 | Example A4 | Example A5 |
|---|---|---|---|---|---|---|---|---|---|
| Phenol resin No. | | A8 | A6 | A7 | A1 | A2 | A3 | A4 | A5 |
| <Characteristics of lignin> | | | | | | | | | |
| Raw material tree type | | - | Coniferous tree | Broadleaf tree | Coniferous tree | Coniferous tree | Coniferous tree | Broadleaf tree | Coniferous tree |
| Lignin production method | | - | High-temperature high-pressure water | Kraft | Soda | Soda | Kraft | Organosolv | Soda |
| Mn | THF (RT) | - | 620 | 910 | 1,490 | 1,660 | 1820 | 1040 | 1,490 |
| Mw | THF (RT) | - | 1300 | 1500 | 7,700 | 41400 (13100) | 74400 (30100) | 2700 | 7,700 |
| Softening temperature (°C) | | 110 | 118 | 114 | 118 | 119 | 119 | 119 | 118 |
| <Characteristics of lignin-modified phenol resin> | | | | | | | | | |
| Molar ratio (F/P) upon synthesis | | - | 0.85 | 0.68 | 0.68 | 0.68 | 0.59 | 0.6 | 0.67 |
| Mn | THF (RT) | 940 | 908 | 1,040 | 980 | 880 | 820 | 710 | 890 |
| Mw | THF (RT) | 9,600 | 3,800 | 2700 | 15200 (6200) | 12600 (8200) | 41800 (10800) | 6200 | 10600 (8800) |
| Lignin modification ratio(%) | | 0 | 30 | 27 | 31 | 31 | 30 | 43 | 31 |
| Amount of free phenol (% by mass) | | 4 | 3 | 1 | 3 | 2 | 1 | 1 | 2 |

### [Examples B1 to B3 and Comparative Examples B1 to B2]

### <Preparation of Lignin-modified Novolac-type Phenol Resin>

A lignin-modified novolac-type phenol resin was prepared by the method shown in each Preparation Example.

### (Preparation Example B1)

(Preparation of Lignin Derivative) A lignin derivative was obtained in the same manner as in Preparation Example A1, except that 5000 parts by weight of pure water, 150 parts by weight of sodium hydroxide, 80 parts by weight of sodium sulfide, and 70 parts by mass of sodium carbonate as a cooking liquor, and 7.5 parts by weight of 9,10-anthraquinone as a cooking aid were used.

(Preparation of Lignin-modified Phenol Resin) 125.0 parts by weight of lignin-modified phenol resin B1 was obtained in the same manner as in Preparation Example A1, except that 100 parts by weight of phenol, 37.4 parts by weight of the lignin derivative solid content, 1.5 parts by weight of oxalic acid, and 51.2 parts by weight of a 37% aqueous solution of formaldehyde were used.

### (Preparation Example B2)

(Preparation of Lignin Derivative) A lignin derivative was obtained in the same manner as in Preparation Example A1, except that beech wood flour having a moisture content of 50% was digested at 195°C for 1 hour by using 3000 parts by weight of ethanol and 2250 parts by weight of water as a cooking liquor, and an aqueous solution obtained by fractionally distilling ethanol from the cooking liquor was centrifuged and freeze-dried to obtain a lignin derivative having a solid content of equal to or more than 90%.

(Preparation of Lignin-modified Phenol Resin) 123.3 parts by weight of lignin-modified phenol resin B2 was obtained in the same manner as in Preparation Example A1, except that 100 parts by weight of phenol, 38.5 parts by weight of the lignin derivative solid content, 1.4 parts by weight of oxalic acid, and 55.2 parts by weight of a 37% aqueous solution of formaldehyde were used.

### (Preparation Example B3)

(Preparation of Lignin Derivative) A lignin derivative was obtained in the same manner as in Preparation Example A1, except that beech wood flour having a moisture content of 50% was digested at 195°C for 1 hour by using 3000 parts by weight of ethanol and 2250 parts by weight of water as a cooking liquor, and an aqueous solution obtained by fractionally distilling ethanol from the cooking liquor was centrifuged and freeze-dried to obtain a lignin derivative having a solid content of equal to or more than 90%.

(Preparation of Lignin-modified Phenol Resin) 156.7 parts by weight of lignin-modified phenol resin B3 was obtained in the same manner as in Preparation Example A1, except that 100 parts by weight of phenol, 79.2 parts by weight of the lignin derivative solid content, 1.8 parts by weight of oxalic acid, and 51.7 parts by weight of a 37% aqueous solution of formaldehyde were used.

The weight average molecular weights, the number average molecular weights, and the softening temperatures of the obtained lignin derivatives were measured using a GPC method or a ring and ball type softening point tester, respectively. The results are shown in Table 1 as "Characteristics of lignin".

Furthermore, the weight average molecular weights, the number average molecular weights, and the lignin modification ratios of the obtained lignin-modified novolac-type phenol resins were measured. These measurement results are shown in Table 1 as "Characteristics of lignin-modified phenol resin".

Since the lignin-modified novolac phenol resin component of the present embodiment may include a component having a particularly high molecular weight, the value obtained by excluding a high-molecular-weight component having a standard polystyrene number average molecular weight of more than 427,000 is also described within ( ) in the table for reference.

### <Production of Resin Composition>

In each Example and each Comparative Example, 100 parts by mass of the lignin-modified phenol resin shown in Table 2 and 10 parts by mass of hexamethylenetetramine as a curing agent were mixed, and the mixture was finely powderized with a pulverizer to obtain a powdery resin composition having a particle size of 10 to 60 um.

### (Phenol Resin)

· Phenol resin B1: Lignin-modified novolac-type phenol resin B1 of Preparation Example B1
· Phenol resin B2: Lignin-modified novolac-type phenol resin B2 of Preparation Example B2
· Phenol resin B3: Lignin-modified novolac-type phenol resin B3 of Preparation Example B3
· Phenol resin B4: Lignin-modified novolac-type phenol resin A6 of Preparation Example A6
· Phenol resin B5: Unmodified novolac-type phenol resin B5 (Mw = 12640, Mn = 1204)

### (Evaluation of Performance of Powdery Resin Composition)

The flow of the obtained powdery resin composition was measured by the following method.

### (Flow)

Using a powdery resin composition obtained by mixing and pulverizing 100 parts by weight of a phenol resin or a lignin-modified phenol resin and 10 parts by weight of hexamethylenetetramine, the flow was measured according to the flow A method of JIS K 6910 "Phenol Resin Testing Methods".

As the flow of the powdery resin composition is longer, a cured product thereof has higher strength.

### <Preparation of Grindstone Test Piece>

In each Example and each Comparative Example, 1200 parts of alumina abrasive grains, SAKURUNDUM A#60 (manufactured by Japan Carlit Co., Ltd.), and 24 parts of a wetter liquid phenol resin, PR-55331 (manufactured by Sumitomo Bakelite Co., Ltd.) were kneaded for 4 minutes by using a Shinagawa type kneader, 144 parts of a phenol resin or unmodified phenol resin prepared in each of the above-described Preparation Examples was added thereto, and the mixture was further kneaded for 2 minutes to produce coated grains. The state of the coated grains was checked immediately after kneading and after storage for 12 hours under the conditions of 25°C and a relative humidity of 60%. Thereafter, the coated grains were charged into a mold and press-molded such that the molded product had a size of 100 mm × 25 mm × 15 mm and a bulk specific gravity of 2.0, and the molded product was placed on a stainless steel plate. This was placed in a hot air circulation type dryer with a programmable function and was cured by using a program of heating from normal temperature to 80°C for 5 hours, from 80°C to 100°C for 5 hours, from 100°C to 120°C for 10 hours, from 120°C to 130°C for 4 hours, and from 130°C to 170°C for 7 hours, maintaining at 180°C for 10 hours, and then cooling to normal temperature over 5 hours, and a grindstone test piece was produced.

### (Evaluation of Performance of Grindstone Test Piece)

The obtained grindstone test pieces were evaluated for the following items. The evaluation results are shown in Table 2.

### (Normal Temperature Bending Strength and Normal Temperature Flexural Modulus)

The flexural modulus and bending strength were measured at 25°C according to JIS K 6911 "General Testing Methods for Thermosetting Plastics". Specifically, a three-point bending test was performed by applying a load at a rate of 2 mm/min using a precision universal testing machine (AUTOGRAPH AG-Xplus manufactured by Shimadzu Corporation).

### (Water-resistant Strength)

With regard to the water-resistant strength, a test piece was immersed in water at 80°C for 2 hours and taken out, and measurement was performed under the same conditions as for the normal temperature bending strength.

### (Heat-resistant Strength)

With regard to the heat-resistant strength, a test piece was placed and left to stand at 200°C in a constant-temperature chamber for 15 minutes, and measurement was performed under the same conditions as for the normal temperature bending strength. The results are shown in Table 2.

### [Table 2]

**Table 2**

| Example No. | | Comparative Example B1 | Comparative Example B2 | Example B1 | Example B2 | Example B3 |
|---|---|---|---|---|---|---|
| Phenol resin No. | | B5 | B4 | B1 | B2 | B3 |
| <Characteristics of lignin> | | | | | | |
| Raw material tree type | | - | Coniferous tree | Coniferous tree | Broadleaf tree | Broadleaf tree |
| Lignin production method | | - | High-temperature high-pressure water | Kraft | Organosolv | Organosolv |
| Mn | THF(RI) | - | 620 | 1820 | 1010 | 1010 |
| Mw | THF(RI) | - | 1300 | 74400 (30100) | 2700 | 2700 |
| Softening temperature | °C | 120 | 118 | 119 | 119 | 122 |
| <Characteristics of lignin-modified phenol resin> | | | | | | |
| Molar ratio (F/P) upon synthesis | | - | 0.85 | 0.59 | 0.64 | 0.6 |
| Mn | THF(RI) | 1200 | 910 | 840 | 900 | 990 |
| Mw | THF(RI) | 12,600 | 3,800 | 13800 (9800) | 5600 | 12400 (7100) |
| Lignin modification ratio | % | 0 | 30 | 30 | 31 | 51 |
| Amount of free phenol | % by mass | 2 | 3 | 1 | 1 | 2 |
| <Characteristics of powdery resin composition> | | | | | | |
| Flow | mm | 20 | 27 | 26 | 29 | 17 |
| <Characteristics of grindstone> | | | | | | |
| Normal temperature strength of grindstone | N/mm² | 38 | 42 | 44 | 44 | 35 |
| Normal temperature elastic modulus of grindstone | N/mm² | 5400 | 5700 | 5800 | 5900 | 5400 |
| Water-resistant strength of grindstone | N/mm² | 23 | 28 | 31 | 31 | 24 |
| Heat-resistant strength (200°C) of grindstone | N/mm² | 37 | 39 | 48 | 53 | 42 |

This application claims priority on the basis of Japanese Patent Application No. 2021-064596, filed April 6, 2021, the disclosure of which is incorporated herein in its entirety by reference.

## Claims

1. A lignin-modified novolac-type phenol resin having a weight average molecular weight of equal to or more than 5500.

2. The lignin-modified novolac-type phenol resin according to claim 1,
wherein the lignin-modified novolac-type phenol resin has a lignin modification ratio of equal to or more than 25% and equal to or less than 60%.

3. The lignin-modified novolac-type phenol resin according to claim 1 or 2,
wherein the lignin-modified novolac-type phenol resin is
a resin obtainable by causing a lignin compound, a phenol compound, and an aldehyde compound to react in a presence of an acid catalyst under conditions in which a molar ratio (F/P) of the aldehyde compound to the phenol compound is equal to or more than 0.5.

4. The lignin-modified novolac-type phenol resin according to claim 3,
wherein the lignin compound has a weight average molecular weight of equal to or more than 2,000 and equal to or less than 100,000.

5. A molding material comprising:
the lignin-modified novolac-type phenol resin according to any one of claims 1 to 4; and
a curing agent.

6. A resin composition comprising:
the lignin-modified novolac-type phenol resin according to any one of claims 1 to 4; and
hexamethylenetetramine.

7. The resin composition according to claim 6,
wherein the resin composition is in a powdery form with an average particle size of equal to or more than 10 µm and equal to or less than 60 pm.

8. A grindstone comprising a cured product of the resin composition according to claim 7.

9. A method for producing a lignin-modified novolac-type phenol resin, the method comprising:
causing a lignin compound, a phenol compound, and an aldehyde compound to react in a presence of an acid catalyst under conditions in which a molar ratio (F/P) of the aldehyde compound to the phenol compound is equal to or more than 0.5, to obtain a lignin-modified novolac-type phenol resin,
wherein the lignin-modified novolac-type phenol resin has a weight average molecular weight of equal to or more than 5500.

10. The method for producing a lignin-modified novolac-type phenol resin according to claim 9,
wherein the lignin-modified novolac-type phenol resin has a lignin modification ratio of equal to or more than 25% and equal to or less than 50%.

11. The method for producing a lignin-modified novolac-type phenol resin according to claim 9 or 10,
wherein the lignin compound has a number average molecular weight of equal to or more than 2,000 and equal to or less than 100,000.

12. The method for producing a lignin-modified novolac-type phenol resin according to any one of claims 9 to 11,
wherein the lignin compound includes volatile matter in an amount of equal to or less than 60% by mass.

13. The method for producing a lignin-modified novolac-type phenol resin according to any one of claims 9 to 12,
wherein the step of causing a lignin compound, a phenol compound, and an aldehyde compound to react in a presence of an acid catalyst under conditions in which a molar ratio (F/P) of the aldehyde compound to the phenol compound is equal to or more than 0.5, includes:
mixing the lignin compound and the phenol compound to obtain a mixture;
mixing the acid catalyst simultaneously with the step of obtaining the mixture, or after the step of obtaining the mixture;
mixing the aldehyde compound after the step of mixing the acid catalyst; and
performing distillation at a temperature equal to or higher than 150°C at normal pressure and/or under reduced pressure.
